# EUROPEAN PATENT APPLICATION

(11) **EP 4 760 544 A1**
(43) Date of publication of application: **17.06.2026**
(21) Application number: 24851096.8
(22) Date of filing: 08.08.2024
(51) Int. Cl.: G06F 16/957

(54) **INFORMATION DISPLAY METHOD AND APPARATUS, ELECTRONIC DEVICE, AND STORAGE MEDIUM**

(30) Priority: 08.08.2023 CN 202310994677
(71) Applicant: Beijing Youzhuju Network Technology Co., Ltd., Beijing 101299 (CN)
(72) Inventor: LI, Lili, Beijing 100028 (CN); ZHOU, Zheng, Beijing 100028 (CN)
(74) Representative: Isarpatent
(86) International application number: PCT/CN2024/110674
(87) International publication number: WO 2025/031451

(57) **Abstract**

The present disclosure relates to a method and apparatus, an electronic device and a storage medium for information display. The method comprises: in response to a detailed information display instruction for a target object, displaying an object detail page corresponding to the target object; displaying in the object detail page a plurality of object feature information of the target object; wherein the object feature information is determined in accordance with history comment information of the target object; object feature dimensions reflected by any two of the object feature information are different. The present disclosure in fact displays a summary conclusion of the history comment information to the user by means of the object feature information, to reduce the time spent on viewing the history review information by the user.

## Description

### CROSS-REFERENCE TO RELATED APPLICATION(S)

This application claims priority to Chinese Application No. 202310994677.0 filed Aug. 08, 2023, the disclosure of which is incorporated herein by reference in its entity.

### FIELD

The present disclosure relates to the field of Internet, and more specifically, to method and apparatus, electronic device and storage medium for information display.

### BACKGROUND

With development of applications and computer technologies, more and more users browse various information through the applications. When browsing various information, the users often have the desire to know the comments on a certain object from other users. It is currently a problem to be solved to assist the users to quickly understand the comment contents from other users.

### SUMMARY

To fully or at least partly address the above technical problem, the present disclosure provides a method and apparatus, an electronic device and a storage medium for information display.

In a first aspect, the present disclosure provides a method for information display, comprising:
in response to a detailed information display instruction for a target object, displaying an object detail page corresponding to the target object;
displaying in the object detail page a plurality of object feature information of the target object; and
wherein the object feature information is determined in accordance with history comment information of the target object; object feature dimensions reflected by any two of the object feature information are different.

In a second aspect, the present disclosure provides an apparatus for information display, comprising:
a first display module, configured to in response to a detailed information display instruction for a target object, display an object detail page corresponding to the target object;
a second display module, configured to displaying in the object detail page a plurality of object feature information of the target object; and
wherein the object feature information is determined in accordance with history comment information of the target object; object feature dimensions reflected by any two of the object feature information are different.

In a third aspect, the present disclosure provides an electronic device, comprising:
one or more processors;
a memory for storing one or more programs;

Wherein the one or more programs, when executed by the one or more processors, causing the one or more processors to implement the above method for information display.

In a fourth aspect, the present disclosure provides a computer-readable storage medium stored thereon with computer programs, the programs, when executed by a processor, implementing the above method for information display.

In comparison to the prior technologies, the technical solution provided by the embodiments of the present disclosure achieves following advantages:

By configuring the display of a plurality of pieces of object feature information of the target object in the object detail page; wherein the object feature information is determined in accordance with the history comment information of the target object; and the object feature dimensions reflected by any two of the object feature information are different, the technical solution provided by the embodiments of the present disclosure in fact displays a summary conclusion of the history comment information to the user by means of the object feature information, to reduce the time spent on viewing the history review information by the user.

### BRIEF DESCRIPTION OF THE DRAWINGS

The drawings here, which are incorporated into the description as a part of it, illustrate the embodiments compliant with the present disclosure, and are combined with the description to explain the principles of the present disclosure.

To more clearly explain the embodiments of the present disclosure or technical solutions in related art, the drawings needed in the description of the embodiments or the related art are to be introduced simply below. Apparently, those skilled in the art may also obtain other drawings from those illustrated without any exercises of inventive work.
Fig. 1 illustrates a flowchart of a method for information display provided by embodiments of the present disclosure;
Figs. 2-3 illustrate schematic diagrams of two object detail pages provided by embodiments of the present disclosure;
Fig. 4 illustrates a flowchart of a method for generating object feature information provided by embodiments of the present disclosure;
Figs. 5-6 illustrate schematic diagrams of two object detail pages provided by embodiments of the present disclosure;
Fig. 7 illustrates a structural diagram of an apparatus for information display in the embodiments of the present disclosure;
Fig. 8 illustrates a structural diagram of an electronic device in the embodiments of the present disclosure.

### DETAILED DESCRIPTION OF EMBODIMENTS

For a clearer understanding of the above objectives, features and advantages of the present disclosure, the solution of the present disclosure is to be further described below. It is to be appreciated that embodiments of the present disclosure and features within the embodiments may be combined with one another without causing conflicts.

Many details are elaborated in the following description to provide a more comprehensive understanding of the present disclosure. However, the present disclosure also may be implemented in different ways than those described here. Apparently, the embodiments disclosed in the description are only part of the embodiments of the present disclosure, rather than all of them.

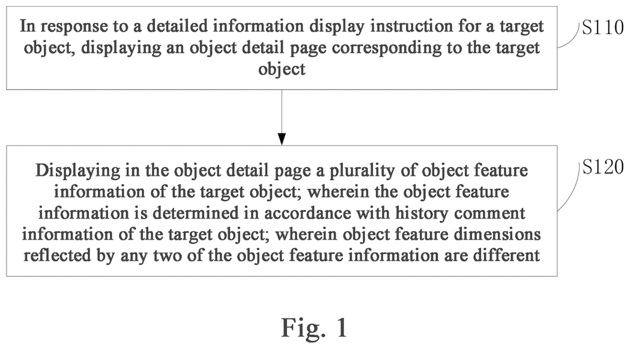

Fig. 1 is a flowchart of a method for information display provided by an embodiment of the present disclosure. This embodiment is adapted to display history comment information in a client. The method may be implemented by an information display apparatus, which apparatus may be implemented by software and/or hardware. The apparatus is configured in an electronic device, such as terminal, including but not limited to, smartphone, laptop computer, tablet computer, wearable device with display, desktop computer, notebook computer, all-in-one, smart home device etc.

As shown in Fig. 1, the method may specifically include:
S110: in response to a detailed information display instruction for a target object, displaying an object detail page corresponding to the target object.

The target object, for example, may be an object displayed to the user. In some embodiments, the target object is a commented object. The target object may be a real object or a virtual object.

In e-commerce scenarios, the target object for example may be a product. Specifically, the target object may include a purchasable item or service etc. The target object includes a plurality of properties. The property of the target object, for example, may include features possessed by the object on account of its construction, composition and the like. If the object is an item, the property of the object includes name, brand, category, style, size, material, function, trademark, type, price, color and package etc. If the object is service, the property of the target object, for example, may include content, brand, category, notice and price etc. The property of the target object, for example, also may include features imparted artificially to the target object, such as, comment information on the target object by the user and information on sales event in which the target object is involved etc.

An object detail page corresponding to the target object, for example, may be a page that displays the property of the target object in details.

A detailed information display instruction for the target object, for example, may be an instruction conveyed to the terminal, showing an expectation to display the object detail page corresponding to the target object.

S120: displaying in the object detail page a plurality of object feature information of the target object; wherein the object feature information is determined in accordance with history comment information of the target object; object feature dimensions reflected by any two of the object feature information are different.

The history comment information is a comment on the target object per se or on other information associated therewith. In e-commerce scenarios, the target object is a purchasable product. The history comment information of the target object may be comments on the target object per se (e.g., how is the quality, whether the object is consistent with the introduction on the object detail page, usage of the object, and usage experience of the object etc.) and logistics services from other users who have purchased the target object.

The object feature information, for example, may be a summary result of multiple pieces of history comment information on the target object from a corresponding object feature dimension. In other words, the object feature information is a result of semantic analysis on multiple pieces of history comment information on the target object. This is a general conclusion.

The object feature dimension, for example, may be a comment angle of the history comment information on the target object. As an example, if the target object is clothes, the object feature dimension includes appearance style, fabric material, size recommendation and service quality etc. It is to be noted that a piece of history comment information may involve one or more object feature dimensions in practice.

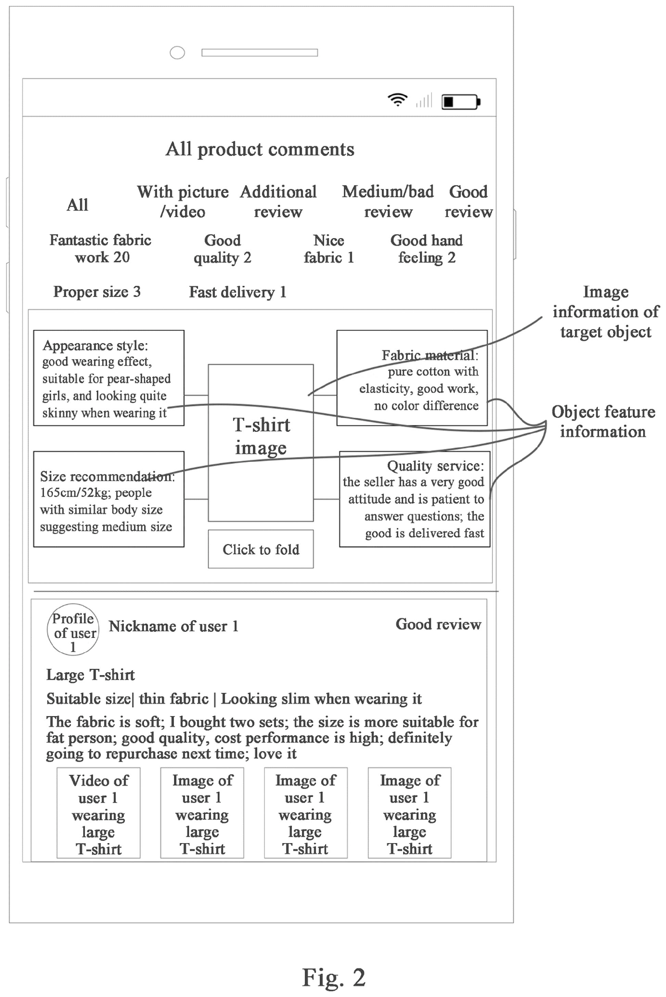

When it is stated that "object feature dimensions reflected by any two of the object feature information are different", it means that the any two of the object feature information are summary results of the history comment information from different comment angles. As an example, it is assumed that the target object is a T-shirt and the object detail page of the T-shirt includes a total of four pieces of object feature information with reference to Fig. 2. The object feature dimensions of the four pieces of object feature information are appearance style, fabric material, size recommendation and service quality respectively.

Alternatively, the object feature information includes dimension information and content information; the dimension information indicates an object feature dimension corresponding to this object feature information. The content information is a specific summary conclusion for the history comment information from the object feature dimension corresponding to the object feature information. As an example, continuing to refer to Fig. 2, "appearance style" in the object feature information 1 is dimension information. "Good wearing effect, suitable for pear-shaped girls, and looking quite skinny when wearing it" is the content information.

Alternatively, a display form of the content information in the object feature information includes at least one of texts and numbers. If the content information is displayed in text form, it means that a summary result in a certain object feature dimension is passed to the user in text form. In case that the content information is displayed in numerical form, it indicates that a summary result in a certain object feature dimension is passed to the user in numerical form.

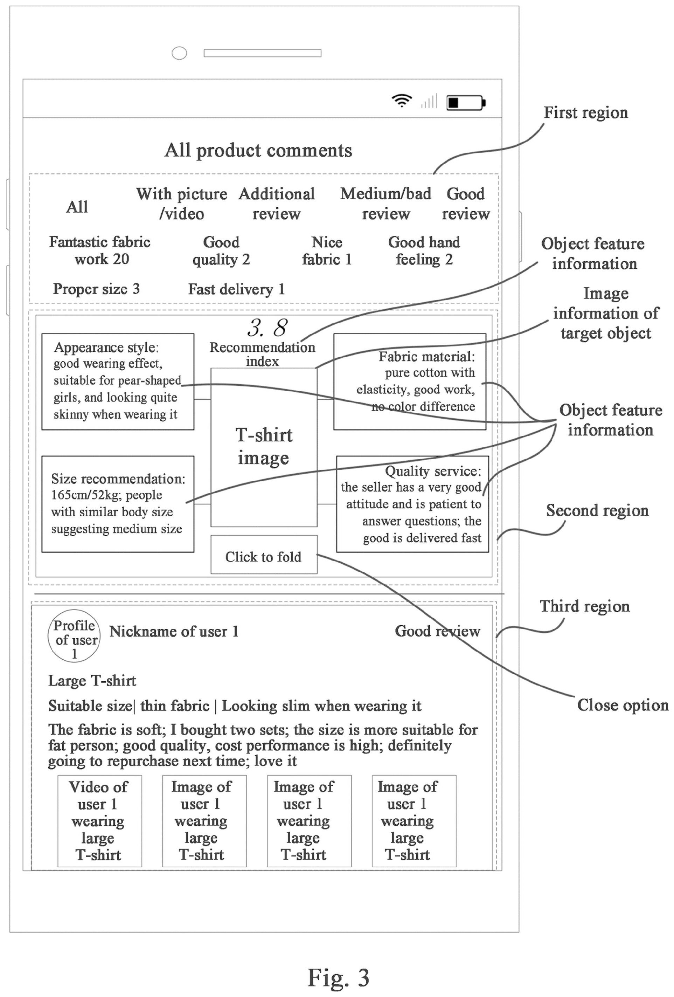

As an example, Fig. 3 includes a total of five pieces of object feature information, respectively being appearance style, fabric material, size recommendation, service quality and recommendation index, wherein the content information is displayed in text form in the object feature information of appearance style, fabric material, size recommendation, and service quality. In the object feature information of recommendation index, the content information is displayed in numerical form.

In one embodiment, the object detail page also includes image information of the target object; the display positions of a plurality of object feature information are located around the display position of the image information.

When it is disclosed that "the display positions of a plurality of object feature information are located around the display position of the image information", it may for example indicate that the display position of the image information is the center position, and the display positions of a plurality of object feature information are distributed over a circle encircling the display position of the image information.

As an example, it is assumed that the target object is a T-shirt and the object detail page of the target object includes four pieces of object feature information with reference to Fig. 2. The object feature dimensions corresponding to the four pieces of object feature information are appearance style, fabric material, size recommendation and service quality respectively. The display position of the object feature information of the appearance style is located to the upper left of the display position of the image information of the target object; the display position of the object feature information of the fabric material is located to the upper right of the display position of the image information of the target object; the display position of the object feature information of the size recommendation is located to the lower left of the display position of the image information of the target object; and the display position of the object feature information of the service quality is located to the lower right of the display position of the image information of the target object. If the display positions of the four pieces of object feature information are connected clockwise, a closed pattern is obtained. The display position of the image information of the target object is located inside the closed pattern.

The specific display position of the object feature information in the object detail page is not restricted in the present disclosure. Alternatively, the object detail page includes a first region, a second region and a third region arranged vertically in order. The first region displays a comment classification tag, and a state of the comment classification tag includes a selected state and an unselected state; the second region displays the object feature information; and the third region displays all history comment information corresponding to the target object or history comment information corresponding to the comment classification tag in selected state.

Wherein the comment classification tag for example may be a tag indicating a category to which the history comment information belongs. The category to which the history comment information belongs may be determined according to keywords included in the history comment information. As an example, the history comment information includes "fast delivery". If "fast delivery" is used as the comment classification tag, the category to which the history comment information belongs is "comment classification tag".

As an example, with reference to Fig. 3, the comment display region in the object detail page includes the first region, the second region and the third region, wherein the first region displays a plurality of comment classification tags, e.g., all, with picture/video, additional review, medium/bad review, good review, fantastic fabric work, good quality, nice fabric, proper size, good hand feeling, and fast delivery. The third region displays all history comment information corresponding to the target object.

Furthermore, a comment classification tag is selected (e.g., clicking or swiping a comment classification tag). The display state of the selected comment classification tag is configured in selected state, and the history comment information corresponding to the comment classification tag in selected state is displayed in the third region.

As an example, continuing to refer to Fig. 3, the first region includes the comment classification tag of "fantastic fabric work". When the user clicks the comment classification tag of "fantastic fabric work", the display state of "fantastic fabric work" is the selected state. Besides, all history comment information under the category of "fantastic fabric work" is displayed in the third region.

The display position of the object feature information is in the second region and before the display position of the specific history comment information (i.e., third region). This may facilitate the user to see the object feature information first before reading the history comment information.

Alternatively, the object detail page includes a comment display region, in which the first region, the second region and the third region are located.

By configuring the display of a plurality of pieces of object feature information of the target object in the object detail page; wherein the object feature information is determined in accordance with the history comment information of the target object; and the object feature dimensions reflected by any two of the object feature information are different, the above technical solution in fact displays a summary conclusion of the history comment information to the user by means of the object feature information, to reduce the time spent on viewing the history review information by the user.

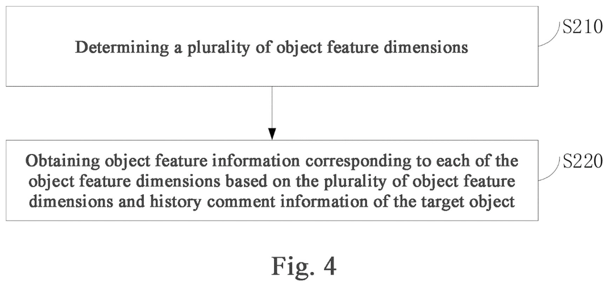

Based on the above technical solution, alternatively, before displaying in the object detail page a plurality of object feature information of the target object, the method, with reference to Fig. 4, further comprises:
S210: determining a plurality of object feature dimensions.

This step may be implemented in many ways and the implementations are not restricted in the present disclosure. As an example, implementations of the step include: determining an object feature dimension in accordance with a type of the target object; and/or determining an object feature dimension in accordance with contents of the history comment information.

"Determining an object feature dimension in accordance with a type of the target object" for example may include: pre-assigning a corresponding relation between the type of the target object and the object feature dimension; when the act of "determining an object feature dimension in accordance with a type of the target object" is executed, the type of the target object is first determined and the corresponding relation between the type of the target object and the object feature dimension is then queried to further obtain the object feature dimension corresponding to the target object.

The corresponding relation between the type of the target object and the object feature dimension is not restricted in the present disclosure. As an example, the object feature dimension corresponding to the clothes type includes appearance style, fabric material, size recommendation and service quality etc. The object feature dimension corresponding to the electronic product type includes appearance style, core function, key selling point and service quality etc. The object feature dimension corresponding to fresh food includes freshness index, taste and flavor, logistics speed and service quality etc. The object feature dimension corresponding to beauty makeup includes efficacy feedback, experience on use, suitable skin type and service quality etc. The object feature dimension corresponding to homeware includes appearance style, layout effect, material and experience on use etc. The object feature dimension corresponding to moms and infants includes suitable age, material capacity, efficacy and experience, and service quality etc.

"Determining an object feature dimension in accordance with contents of the history comment information" indicates that there are no specific object feature dimensions before the processing of the history comment information, and the object feature dimension is determined during the processing of the history comment information (e.g., semantic analysis). Alternatively, the object feature dimension is determined in accordance with opinions and/or feelings included in the history comment information. As an example, if the target objects are clothes, the opinions of some comments are nice style and the opinions of some comments are comfortable fabric among the plurality of comments on the target object. In such case, nice style and comfortable fabric are determined as the object feature dimensions.

S220: obtaining object feature information corresponding to each of the object feature dimensions based on the plurality of object feature dimensions and history comment information of the target object.

This step may be implemented in many ways and the implementations are not restricted in the present disclosure. As an example, implementations of the step include: extracting, from the history comment information, character strings corresponding to the object feature dimensions respectively, to obtain a plurality of character string sets, the character string sets being in one-to-one correspondence with the object feature dimensions; obtaining a plurality of object feature information based on the plurality of character string sets, the object feature information being in one-to-one correspondence with the character string sets.

As an example, if the target object is a T-shirt, the object feature dimension includes fabric material and size recommendation. A piece of history comment information of the target object says "fabric feels soft; bought two sets; the size is a bit larger than the standard; the quality is good; and the cost performance is quite high". A character string, i.e., "fabric feels soft", is extracted from the history comment information as elements in the character string set corresponding to the fabric material, and "the size is a bit larger than the standard" is taken as elements in the character string set corresponding to the size commendation. By extracting character strings from the history comment information of the target object respectively, the number of elements included in the character string set increases constantly. Since the elements in respective character string sets are extracted based on the object feature dimension, the respective elements in any single character string set correspond to the same object feature dimension. A piece of object feature information may be obtained from summarizing opinions of all the elements in a single character string set. The object feature dimension corresponding to the object feature information is the object feature dimension corresponding to the character string set from which the object feature information is obtained.

The above technical solution illustrates a specific implementation method for obtaining the object feature information, and the method is simple and easy to perform.

Moreover, in the object feature information, the dimension information is determined in accordance with the object feature dimension, and the content information is determined according to the character string set.

In practice, alternatively, the object feature information may be constantly displayed in the object detail page, i.e., the object feature information is always in display state by default.

In another embodiment, when the object detail page is displayed for the first time, the object feature information is not displayed in the object detail page by default. Alternatively, S120 includes: in response to a preset trigger operation for the object detail page, displaying in the object detail page a plurality of object feature information of the target object; or displaying a target option in the object detail page; in response to a select operation on the target option, displaying in the object detail page a plurality of object feature information of the target object.

The first preset trigger operation, for example, may be a pre-assigned operation to notify the terminal that the user expects to display the object feature information. As an example, the first preset trigger operation is an operation that slides along a specified direction or track in the object detail page, or a clicking or sliding operation in a certain region of the object detail page etc. For example, the first preset trigger operation is a sliding-down operation.

The target option may be viewed as a control switch for controlling whether the object feature information is displayed or not. A select operation on the target option, for example, may be a clicking operation or a sliding operation on the target option. When a select operation is performed on the target option, it means that the user expects to display the object feature information.

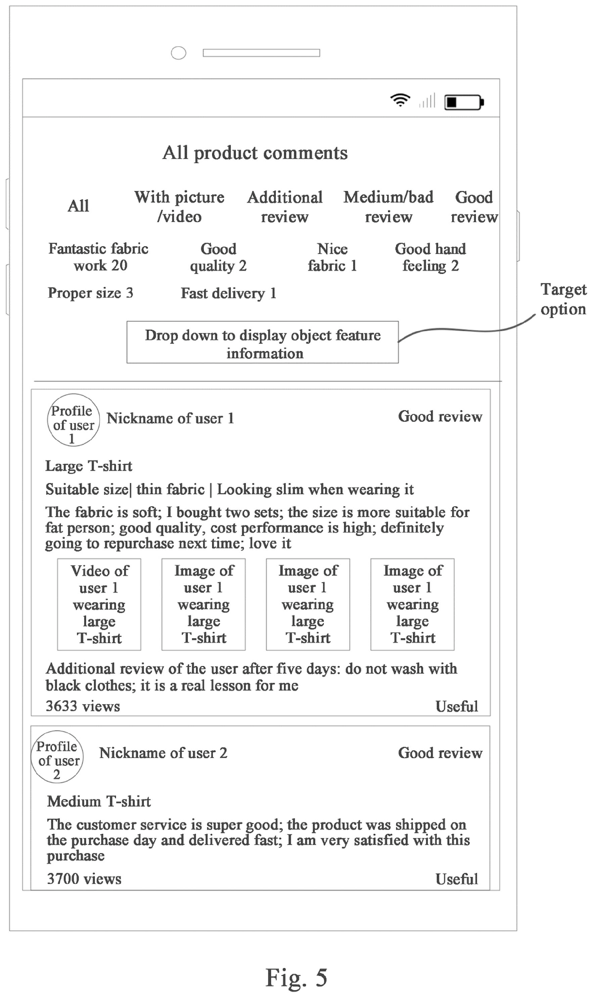

As an example, the object feature information is not displayed by default. With reference to Fig. 5, the object detail page includes the target option, but not the object feature information. If the user clicks the target option, the object feature information is displayed in the object detail page according to Fig. 3. Such setting is made to not display the object feature information directly. The user may control whether the object feature information is displayed as needed.

Furthermore, after the S120, the method also comprises: in response to a second preset trigger operation for the object detail page, stopping display of the object feature information; or displaying a close option in the object detail page; in response to a select operation for the close option, stopping display of the object feature information.

Stopping the display of the object feature information, for example, may be not displaying the object feature information in the object detail page, i.e., folding or not displaying the object feature information.

The second preset trigger operation, for example, may be a pre-assigned operation to notify the terminal that the user expects to stop the display of the object feature information. As an example, the second preset trigger operation may be an operation sliding along a specified direction or track in the object detail page, or a clicking or sliding operation in a certain region of the object detail page etc. For example, the second preset trigger operation is a sliding-up operation.

A close option may be viewed as a control switch for controlling stopping the display of the object feature information. A select operation for the close option, for example, may be a clicking operation or a sliding operation on the close option. When a select operation is performed on the close option, it means that the user expects to stop displaying the object feature information.

Continuing to refer to Fig. 3, the object detail page also includes the close option in addition to the object feature information. If the user clicks the close option, the object detail page no longer includes the object feature information according to Fig. 5. Such setting is made to cause the user to control "stopping the display of the object feature information" as needed.

Based on the above technical solutions, in one embodiment, alternatively, the target object corresponds to a plurality of specification property information; at least one specification property information of the plurality of specific property information is in selected state; the object feature information is determined in accordance with history comment information of a first target object; and the first target object is a target object defined by specification property information in selected state.

The specification property information includes one or more target object properties. By selecting the specification property information, a minimum stock keeping unit (SKU) may be defined. The minimum stock keeping unit is the basic unit for measuring in and out of stock. The minimum stock keeping unit is the minimum unit for defining the product and is determined by specification property combination of the product. For example, the clothes have a plurality of specification properties ready to be selected by the user, such as size and color etc. Assuming that there are three options for each of the size and the color of the clothes, the clothes has a total of 9 (3*3=9) minimum stock keeping units. Each minimum stock keeping unit has a unique code. The code is to distinguish and record information of different property combinations. In other words, one target object may include one or more specification property information. Through the combination of the one or more specification property information, a minimum stock keeping unit may be obtained. As an example, the specification property information includes at least one of: size, style, material and color.

The first target object is a specific minimum stock keeping unit, which is defined by the specification property information in selected state.

As an example, if the target object is a T-shirt, it includes "size" as the specification property. The specification property of the target object specifically includes: "large", "medium" and "small". In practice, other users may have purchased T-shirts in large, medium and small sizes, and given a comment on their purchased T-shirts respectively. If "large" is in selected state, the first target object is the T-shirt in large size. The object feature information is determined in accordance with a plurality of history comment information on the T-shirt in large size.

When it is configured that the object feature information is determined according to the history comment information of the first target object, the object feature information may be kept consistent with the specification property information in selected state, such that the displayed object feature information is more pertinent.

In another embodiment, alternatively, the target object corresponds to a plurality of specification property information; displaying the object feature information in the object detail page includes: displaying in the object detail page the first object feature information and an update option, where the first object feature information is determined in accordance with the history comment information on the target object; in response to a select operation for the update option, switching from the first object feature information to the second object feature information, wherein the second object feature information is determined in accordance with the history comment information of the first target object; wherein the first target object is the target object in selected state defined by the specification property information.

The object targeted by the first object feature information includes the target objects respectively defined by the specification properties. The object targeted by the second object feature information is the target object in selected state defined by the specification property information. As an example, if the target object is a T-shirt, it corresponds to three specification properties, i.e., "large", "medium" and "small". In practice, other users may have purchased T-shirts in large, medium and small sizes, and given a comment on their purchased T-shirts. The first object feature information is summarized from the history comment information on large T-shirts, the history comment information on medium T-shirts, and the history comment information on small T-shirts. If "large" is in selected state, the second object feature information is obtained by summarizing the history comment information on large T-shirts.

The update option may be regarded as a switch for switching between the first object feature information and the second object feature information. The select operation for the update option includes a clicking operation or a sliding operation for the update option.

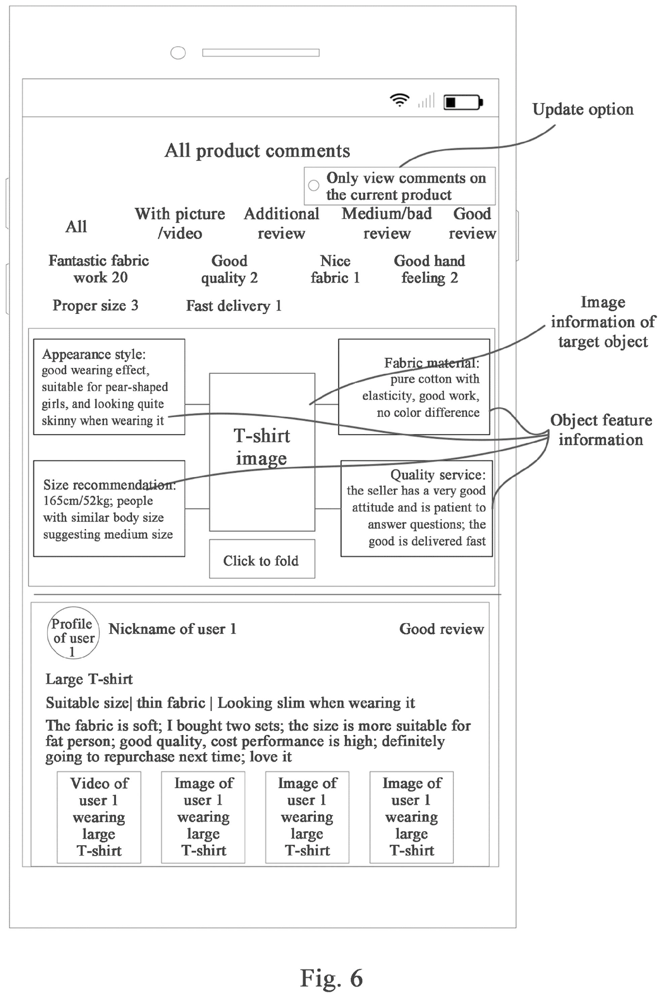

As an example, according to Fig. 6, the update option is "viewing comments on the current product only" in the object detail page. When the update option is not selected, it is in unselected state and the object detail page displays the first object feature information; after the update option is selected, it is in selected state and the object detail page displays the second object feature information. This may facilitate the users to pertinently view the summary result of the history comment information on the object they expect to purchase in accordance with their purchase needs.

It is to be explained that the above respective method embodiments are described as a series of act combinations for simplicity purpose. However, those skilled in the art should know that the present invention is not restricted to the sequence of the described acts. In accordance with the present invention, some steps may be performed in other orders or at the same time. Then, those skilled in the art also should know that the embodiments described in the description are preferred embodiments and the acts and modules involved therein are not necessarily essential to the present invention.

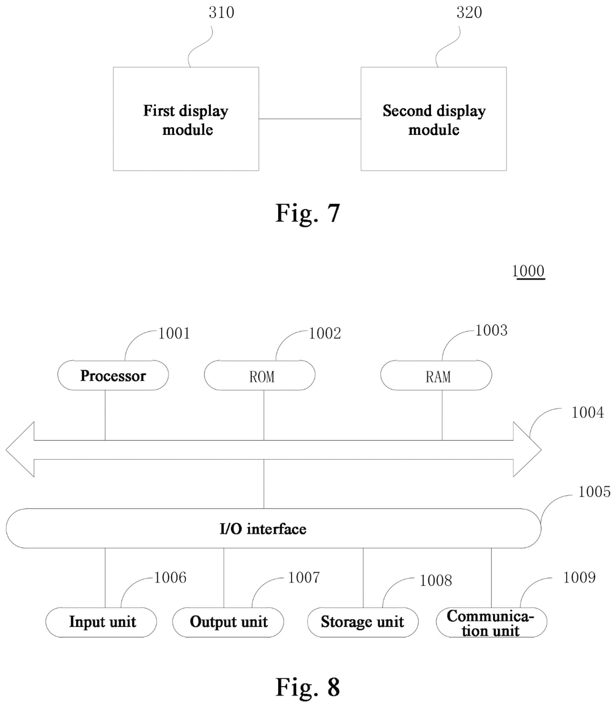

Fig. 7 is a structural diagram of an information display apparatus in the embodiments of the present disclosure. The information display apparatus provided by the embodiments of the present disclosure may be configured in a client. According to Fig. 7, the information display apparatus specifically includes:
a first display module 310, configured to in response to a detailed information display instruction for a target object, display an object detail page corresponding to the target object;
a second display module 320, configured to display in the object detail page a plurality of object feature information of the target object; and
wherein the object feature information is determined in accordance with history comment information of the target object; object feature dimensions reflected by any two of the object feature information are different.

Furthermore, the object detail page also includes image information of a target object;
display positions of the plurality of object feature information are located around a display position of the image information.

Moreover, the apparatus also comprises a generating module, configured to:
determine a plurality of object feature dimensions;
obtain object feature information corresponding to each of the object feature dimensions based on the plurality of object feature dimensions and history comment information of the target object.

Further, the generating module configured to:
determine an object feature dimension in accordance with a type of the target object; and/or
determine an object feature dimension in accordance with contents of the history comment information.

Further, the generating module configured to:
extract, from the history comment information, character strings corresponding to the object feature dimensions respectively, to obtain a plurality of character string sets, the character string sets being in one-to-one correspondence with the object feature dimensions;
obtain a plurality of object feature information based on the plurality of character string sets, the object feature information being in one-to-one correspondence with the character string sets.

Moreover, the object feature information includes dimension information and content information; wherein the dimension information is determined in accordance with the object feature dimension, and the content information is determined in accordance with the character string sets.

Furthermore, the object detail page includes a first region, a second region and a third region arranged vertically in order;
the first region for displaying a comment classification tag, and a state of the comment classification tag includes a selected state and an unselected state;
the second region for displaying the object feature information;
the third region for displaying all of the history comment information corresponding to the target object or the history comment information corresponding to the comment classification tag in selected state.

Furthermore, the second display module 320, configured to:
in response to a preset trigger operation for the object detail page, display in the object detail page a plurality of object feature information of the target object; or
display a target option in the object detail page; and in response to a select operation on the target option, displaying in the object detail page a plurality of object feature information of the target object.

Furthermore, the second display module 320, configured to after displaying in the object detail page a plurality of object feature information of the target object: in response to a second preset trigger operation for the object detail page, stop displaying the object feature information; or
display a close option in the object detail page; in response to a select operation for the close option, stop display of the object feature information.

Moreover, the target object corresponds to a plurality of specification property information; at least one specification property information of the plurality of specific property information is in selected state; the object feature information is determined in accordance with history comment information of a first target object; and the first target object is a target object defined by specification property information in selected state.

The apparatus for information display provided by the embodiments of the present disclosure may execute the steps performed by the client in the method for information display provided by method embodiments of the present disclosure, and achieve advantageous effects, which will not be repeated here.

Fig. 8 illustrates a structural diagram of an electronic device provided by the embodiments of the present disclosure. Specifically, with reference to Fig. 8, a structural diagram of an electronic device 1000 adapted to implement embodiments of the present disclosure is shown. In the embodiments of the present disclosure, the electronic device 1000 in the embodiments of the present disclosure may include, but not limited to, mobile terminals, such as mobile phones, notebooks, digital broadcast receivers, PDAs (Personal Digital Assistant), PADs (tablet computer), PMPs (Portable Multimedia Player), vehicle terminals (such as car navigation terminal) and wearable electronic devices and fixed terminals, e.g., digital TVs, desktop computers and smart home devices etc. The electronic device shown in Fig. 8 is just an example and will not put any restrictions on the functions and application ranges of the embodiments of the present disclosure.

According to Fig. 8, the electronic device 1000 may include a processor (e.g., central processor, graphic processor and the like) 1001, which can execute various suitable actions and processing based on the programs stored in the read-only memory (ROM) 1002 or programs loaded in the random-access memory (RAM) 1003 from a memory 1008, so as to implement the method for information display according to the embodiments of the present disclosure. The RAM 1003 can also store all kinds of programs and information required by the operations of the electronic device 1000. Processor 1001, ROM 1002 and RAM 1003 are connected to each other via a bus 1004. The input/output (I/O) interface 1005 is also connected to the bus 1004.

Usually, input unit 1006 (including touch screen, touchpad, keyboard, mouse, camera, microphone, accelerometer, gyroscope and like) and output unit 1007 (including liquid crystal display (LCD), speaker and vibrator etc.), memory 1008 (including tape and hard disk etc.) and communication unit 1009 may be connected to the I/O interface 1005. The communication unit 1009 may allow the electronic device 1000 to exchange information with other devices through wired or wireless communications. Although Fig. 8 illustrates the electronic device 1000 having various units, it is to be understood that it is not a prerequisite to implement or provide all illustrated units. Alternatively, more or less units may be implemented or provided.

In particular, in accordance with embodiments of the present disclosure, the process depicted above with reference to the flowchart may be implemented as computer software programs. For example, the embodiments of the present disclosure include a computer program product including computer programs carried on a non-transient computer readable medium, wherein the computer programs include program codes for executing the method demonstrated by the flowchart, to implement the above method for information display. In these embodiments, the computer programs may be loaded and installed from networks via the communication unit 1009, or installed from the memory 1008, or installed from the ROM 1002. The computer programs, when executed by the processor 1001, performs the above functions defined in the method according to the embodiments of the present disclosure.

It is to be explained the above disclosed computer readable medium may be computer readable signal medium or computer readable storage medium or any combinations thereof. The computer readable storage medium for example may include, but not limited to, electric, magnetic, optical, electromagnetic, infrared or semiconductor systems, apparatus or devices or any combinations thereof. Specific examples of the computer readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof. In the present disclosure, the computer readable storage medium may be any tangible medium that contains or stores programs. The programs may be utilized by instruction execution systems, apparatuses or devices in combination with the same. In the present disclosure, the computer readable signal medium may include an information signal propagated in baseband or as part of a carrier wave, carrying computer readable program codes therein. Such propagated information signals may take many forms, including but not limited to, electromagnetic signals, optical signals, or any suitable combinations thereof. The computer readable signal medium may also be any computer readable medium in addition to the computer readable storage medium. The computer readable signal medium may send, propagate, or transmit programs for use by or in connection with instruction execution systems, apparatuses or devices. Program codes contained on the computer readable medium may be transmitted by any suitable media, including but not limited to: electric wires, fiber optic cables and RF (radio frequency) etc., or any suitable combinations thereof.

In some implementations, clients and servers may communicate with each other via any known or to be developed network protocols, such as HTTP (HyperText Transfer Protocol) and interconnect with digital data communications in any forms or media (such as communication networks). Examples of the communication networks include Local Area Network (LAN), Wide Area Network (WAN), internet work (e.g., Internet) and end-to-end network (such as ad hoc end-to-end network), and any known or to be developed networks.

The above computer readable medium may be included in the aforementioned electronic device or stand-alone without fitting into the electronic device.

The above computer readable medium bears one or more programs. When the above one or more programs are executed by the electronic device, the electronic device is caused to:
in response to a detailed information display instruction for a target object, display an object detail page corresponding to the target object;
display in the object detail page a plurality of object feature information of the target object;
wherein the object feature information is determined in accordance with history comment information of the target object; object feature dimensions reflected by any two of the object feature information are different.

Alternatively, when the above one or more programs are executed by the electronic device, the electronic device also may implement other steps of the above embodiments.

Computer program instructions for executing operations of the present disclosure may be written in one or more programming languages or combinations thereof. The above programming languages include, but not limited to, object-oriented programming languages, e.g., Java, Smalltalk, C++ and so on, and traditional procedural programming languages, such as "C" language or similar programming languages. The program codes can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider).

The flow chart and block diagram in the drawings illustrate system architecture, functions and operations that may be implemented by system, method and computer program product according to various implementations of the present disclosure. In this regard, each block in the flow chart or block diagram can represent a module, a part of program segment or code, wherein the module and the part of program segment or code include one or more executable instruction for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Units described in the embodiments of the present disclosure may be implemented by software or hardware. In some cases, the name of the unit should not be considered as the restriction over the unit per se.

The functionality described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

In the context of the present disclosure, machine readable medium may be tangible medium that may include or store programs for use by or in connection with instruction execution systems, apparatuses or devices. The machine readable medium may be machine readable signal medium or machine readable storage medium. The machine readable storage medium for example may include, but not limited to, electric, magnetic, optical, electromagnetic, infrared or semiconductor systems, apparatus or devices or any combinations thereof. Specific examples of the machine readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof.

In accordance with one or more embodiments of the present disclosure, there is provided an electronic device, comprising:
One or more processor;
A memory for storing one or more programs;
Wherein the one or more programs, when executed by the one or more processors, causing the one or more processors to implement any of the method for information display provided by the present disclosure.

In accordance with one or more embodiments of the present disclosure, there is provided a computer-readable storage medium stored thereon with computer programs, wherein the programs, when executed by the processor, implement any of the method for information display provided by the present disclosure.

Embodiments of the present disclosure also provide a computer program product including computer programs or instructions, the computer programs or instructions, when executed by the processor, implementing the above method for information display.

It is to be explained that relation terms, such as first, second and the like, only distinguish one entity or operation from a further entity or operation, without requiring or suggesting any actual relation or sequence among these entities or operations. Besides, the terms "include", "contain" or other variants indicate non-exclusive inclusion, such that a procedure, method, object or device consisting of a number of elements not only include these elements, but also contain other elements not listed or inherent elements. Without further limitations, when it is described that "... includes one ...", the procedure, method, object or device including this element may further contain other elements.

The above description relates to specific implementations of the present disclosure only, which enables those skilled in the art to understand or implement the present disclosure. Many modifications to the embodiments may be obvious for those skilled in the art. General principles defined in the text also can be implemented in other embodiments without deviating from the spirit or scope of the present application. Hence, the present disclosure is not restricted to the embodiments illustrated here; instead, it may have the broadest scope consistent with the disclosed principles and inventive points.

## Claims

1. A method for information display, comprising:
in response to a detailed information display instruction for a target object, displaying an object detail page corresponding to the target object;
displaying, in the object detail page, a plurality of object feature information of the target object; and
wherein the object feature information is determined in accordance with history comment information of the target object, and object feature dimensions reflected by any two of the object feature information are different.

2. The method of claim 1, wherein the object detail page further includes image information of the target object; and
display positions of the plurality of object feature information are located around a display position of the image information.

3. The method of claim 1, wherein before displaying, in the object detail page, the plurality of object feature information of the target object, the method further comprises:
determining a plurality of object feature dimensions; and
obtaining object feature information corresponding to each of the object feature dimensions based on the plurality of object feature dimensions and the history comment information of the target object.

4. The method of claim 3, wherein determining the plurality of object feature dimensions includes:
determining an object feature dimension in accordance with a type of the target object; and/or
determining an object feature dimension in accordance with content of the history comment information.

5. The method of claim 3, wherein obtaining the object feature information corresponding to each of the object feature dimensions based on the plurality of object feature dimensions and the history comment information of the target object includes:
extracting, from the history comment information, character strings corresponding to the object feature dimensions respectively, to obtain a plurality of character string sets, wherein the character string sets are in one-to-one correspondence with the object feature dimensions; and
obtaining a plurality of object feature information based on the plurality of character string sets, wherein the object feature information is in one-to-one correspondence with the character string sets.

6. The method of claim 5, wherein:
the object feature information includes dimension information and content information; wherein the dimension information is determined in accordance with the object feature dimension, and the content information is determined in accordance with the character string sets.

7. The method of claim 1, wherein the object detail page includes a first region, a second region, and a third region arranged vertically in order;
the first region is used to display a comment classification tag, and a state of the comment classification tag includes a selected state and an unselected state;
the second region is used to display the object feature information; and
the third region is used to display all of the history comment information corresponding to the target object or the history comment information corresponding to the comment classification tag in the selected state.

8. The method of claim 1, wherein displaying in the object detail page the plurality of object feature information of the target object includes:
in response to a preset trigger operation for the object detail page, displaying, in the object detail page, a plurality of object feature information of the target object; or
displaying a target option in the object detail page; and in response to a select operation for the target option, displaying, in the object detail page, a plurality of object feature information of the target object.

9. The method of claim 1, wherein after displaying, in the object detail page, the plurality of object feature information of the target object, the method further comprises:
in response to a second preset trigger operation for the object detail page, stopping displaying the object feature information; or
displaying a close option in the object detail page; in response to a select operation for the close option, stopping displaying the object feature information.

10. The method of claim 1, wherein the target object corresponds to a plurality of specification property information, at least one specification property information of the plurality of specific property information is in selected state, the object feature information is determined in accordance with history comment information of a first target object, and the first target object is a target object defined by specification property information in selected state.

11. An apparatus for information display, comprising:
a first display module, configured to in response to a detailed information display instruction for a target object, display an object detailed page corresponding to the target object;
a second display module, configured to display in the object detailed page a plurality of object feature information of the target object; and
wherein the object feature information is determined in accordance with history comment information of the target object, and object feature dimensions reflected by any two of the object feature information are different.

12. An electronic device, wherein the electronic device comprises:
one or more processors;
a memory for storing one or more programs;
wherein the one or more programs, when executed by the one or more processors, causing the one or more processors to implement the method according to any of claims 1-10.

13. A computer-readable storage medium with computer programs stored thereon, wherein that, programs, when executed by a processor, execute the method according to any of claims 1-10.

14. A computer program product comprising instructions which, when executed by a processor, implement the method according to any one of claims 1 to 10.
